# EUROPÄISCHE PATENTANMELDUNG

(11) **EP 2 781 779 A1**
(43) Veröffentlichungstag der Anmeldung: **24.09.2014**
(21) Anmeldenummer: 14153649.0
(22) Anmeldetag: 03.02.2014
(51) Int. Cl.: F16D 3/12, F16F 1/14, F16F 1/36, F16H 57/00

(54) **Antriebswelle und Herstellungsverfahren für eine Antriebswelle**

(30) Priorität: 12.03.2013 DE 102013204199
(71) Anmelder: ROBERT BOSCH GMBH, 70442 Stuttgart (DE)
(72) Erfinder: Bollwerk, Andre, 71711 Steinheim An Der Murr (DE); Blosch, Georg, 71711 Murr (DE); Fellmeth, Reiner, 74354 Besigheim (DE); Gaertner, Oliver, 74232 Abstatt (DE); Schuller, Wolfgang, 74389 Cleebronn (DE); Hermann, Harald, 71292 Friolzheim (DE); Sinnl, Erwin, 74336 Brackenheim (DE); Hennig, Oliver, 74182 Obersulm (DE); Oezkan, Goekhan, 71732 Tamm (DE); Schuessler, Michael, 74743 Seckach (DE)

(57) **Zusammenfassung**

Die Erfindung betrifft eine Antriebswelle (10) mit einem Grundkörper (12), einem Schneckenrad (14) an einem ersten Abschnitt (18a) des Grundkörpers (12), und einem Ritzel (16) an einem zweiten Abschnitt (18b) des Grundkörpers (12), wobei zwischen dem ersten Abschnitt (18a) und dem zweiten Abschnitt (18b) ein Zwischenabschnitt (18c) des Grundkörpers (12) liegt, wobei die Antriebswelle (10) mindestens eine Torsionsfeder (20) und/oder mindestens eine Torsionsstange in dem Zwischenabschnitt (18c) des Grundkörpers (12) umfasst. Außerdem betrifft die Erfindung ein Herstellungsverfahren für eine Antriebswelle (10) mit den Schritten: Ausbilden oder Anordnen eines Schneckenrads (14) an einem ersten Abschnitt (18a) eines Grundkörpers (12) der Antriebswelle (10), Ausbilden oder Anordnen eines Ritzels (16) an einem zweiten Abschnitt (18b) des Grundkörpers (12), welcher um einen Zwischenabschnitt (18c) des Grundkörpers (12) beabstandet von dem ersten Abschnitt (18a) liegt, und Ausbilden oder Anordnen mindestens einer Torsionsfeder (20) und/oder mindestens einer Torsionsstange in dem Zwischenabschnitt (18c) des Grundkörpers (12).

## Beschreibung

Die Erfindung betrifft eine Antriebswelle und einen elektromechanischen Bremskraftverstärker. Ebenso betrifft die Erfindung eine Kupplung. Des Weiteren betrifft die Erfindung ein Herstellungsverfahren für eine Antriebswelle und ein Herstellungsverfahren für einen elektromechanischen Bremskraftverstärker.

### Stand der Technik

In der DE 10 2009 027 468 A1 ist eine Kraftübertragungsanordnung beschrieben. Die Kraftübertragungsanordnung umfasst einen Elektromotor, welcher eine Schneckenwelle antreibt. Außerdem umfasst die Kraftübertragungsanordnung zwei Antriebswellen mit jeweils einem Schneckenrad und einem Ritzel. Die Schneckenräder sind mit der Schneckenwelle so verzahnt, dass sie mittels eines Betriebs des Elektromotors in eine Drehbewegung versetzbar sind, wodurch ein Mitdrehen der Ritzel bewirkbar ist. Die beiden Ritzel greifen derart in zwei Zahnreihen eines verstellbaren Körpers ein, dass der verstellbare Körper mittels der Drehbewegung der beiden Ritzel linear verstellbar ist.

### Offenbarung der Erfindung

Die Erfindung schafft eine Antriebswelle mit den Merkmalen des Anspruchs 1, einen elektromechanischen Bremskraftverstärker mit den Merkmalen des Anspruchs 7, eine Kupplung mit den Merkmalen des Anspruchs 8, ein Herstellungsverfahren für eine Antriebswelle mit den Merkmalen des Anspruchs 9 und ein Herstellungsverfahren für einen elektromechanischen Bremskraftverstärker mit den Merkmalen des Anspruchs 10.

### Vorteile der Erfindung

Mittels der zwischen dem Schneckenrad und dem Ritzel angeordneten mindestens einen Torsionsfeder und/oder mindestens einen Torsionsstange kann eine Schlagbeanspruchung erfolgreich gedämpft werden. Die vorliegende Erfindung realisiert somit eine Torsionsdämpfung im Antriebsstrang. Mittels der Torsionsdämpfung im Antriebsstrang kann eine Überlast der Zähne des Schneckenrads und/oder des Ritzels verlässlich verhindert werden. Mittels der vorliegenden Erfindung kann damit einem frühzeitigen Zahnverschleiß erfolgreich entgegengewirkt werden.

Es wird darauf hingewiesen, dass die mindestens eine Torsionsfeder und/oder mindestens eine Torsionsstange kostengünstige elastische Elemente zum Realisieren der vorteilhaften Torsionsdämpfung im Antriebsstrang sind. Somit sind die Vorteile der vorliegenden Erfindung ohne eine Steigerung der Herstellungskosten für die Antriebswelle und ohne einen signifikanten Mehraufwand bei der Herstellung der Antriebswelle realisierbar.

In einer vorteilhaften Ausführungsform sind der Grundkörper, das Schneckenrad, das Ritzel, die mindestens Torsionsfeder und/oder die mindestens eine Torsionsstange aus einem Kunststoff und/oder Gummi gebildet. Zum Herstellen der Antriebswelle kann somit ein kostengünstiges Material verwendet werden.

Insbesondere können Kohlenfasern und/oder Glasfasern in den Kunststoff eingebettet sein. Somit kann auch bei einer Ausbildung der Antriebswelle aus einem kostengünstigen Kunststoff eine Stoßbelastung in eine Torsionskraft verlässlich umgewandelt werden.

Beispielsweise können das Schneckenrad und/oder das Ritzel auf den Grundkörper aufgepresst sein. Als Alternative dazu können der Grundkörper, das Schneckenrad, das Ritzel, die mindestens eine Torsionsfeder und/oder die mindestens Torsionsstange auch einstückig ausgebildet sein. Insbesondere kann somit die Antriebswelle auch als ein einstückiges Bauteil mittels eines Spritzgussverfahrens auf einfache Weise hergestellt sein.

Vorzugsweise ist der erste Abschnitt in Bezug zu dem zweiten Abschnitt unter einer Verbiegung der mindestens einen Torsionsfeder und/oder der mindestens einen Torsionsstange um eine entlang des Grundkörpers verlaufende Drehachse verdrehbar. Auf diese Weise ist eine Stoßbelastung/Schlagbeanspruchung verlässlich dämpfbar.

Die oben genannten Vorteile sind auch bei einem elektromechanischen Bremskraftverstärker mit einer derartigen Antriebswelle gewährleistet.

Eine Gewährleistung der beschriebenen Vorteile liegt auch bei einer Kupplung mit einer derartigen Antriebswelle vor.

Auch mittels des Herstellungsverfahrens für eine Antriebswelle sind die oben aufgezählten Vorteile bewirkbar. Das Herstellungsverfahren für eine Antriebswelle ist entsprechend der erläuterten Ausführungsformen weiterbildbar.

Des Weiteren können die Vorteile realisiert werden, indem das Herstellungsverfahren für einen elektromechanischen Bremskraftverstärker entsprechend ausgeführt wird. Auch das Herstellungsverfahren für einen elektromechanischen Bremskraftverstärker ist entsprechend den oben ausgeführten Ausführungsformen weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform der Antriebswelle; und
- Fig. 2: ein Flussdiagramm zum Erläutern einer Ausführungsform des Herstellungsverfahrens für eine Antriebswelle.

### Ausführungsformen der Erfindung

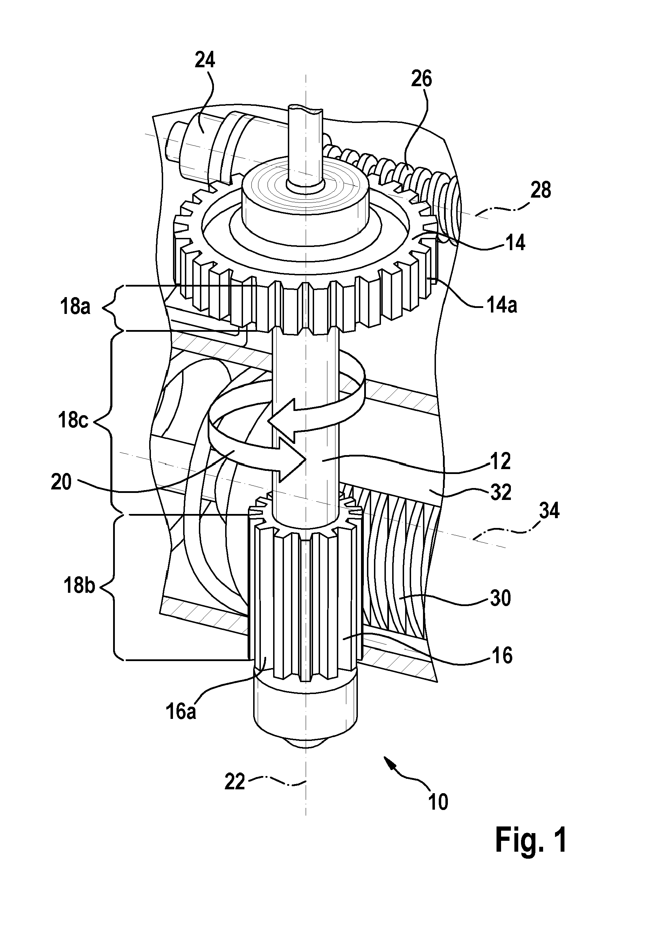

Fig. 1 zeigt eine schematische Darstellung einer Ausführungsform der Antriebswelle.

Die in Fig. 1 schematisch dargestellte Antriebswelle 10 umfasst einen Grundkörper 12. Der Grundkörper kann z.B. die Form eines Zylinders oder einer Stange haben. Die Ausbildbarkeit des Grundkörpers 12 ist jedoch nicht auf eine Zylinderform oder eine Stangenform limitiert. Stattdessen kann die Form des Grundkörpers 12 auch zumindest teilweise abweichend von einer Zylinderform oder Stangenform ausgebildet sein.

Die Antriebswelle 10 weist ein Schneckenrad 14 an einem ersten Abschnitt 18a des Grundkörpers 12 und ein Ritzel 16 an einem zweiten Abschnitt 18b des Grundkörpers 12 auf. Die Ausbildbarkeit der Antriebswelle 10 ist nicht auf eine bestimmte Form oder Größe der Zähne 14a des Schneckenrads 14 oder der Zähne 16a des Ritzels 16 limitiert. Ebenso sind die Durchmesser des Schneckenrads 14 und des Ritzels 16 relativ frei wählbar. Zwischen dem ersten Abschnitt 18a und dem zweiten Abschnitt 18b liegt ein Zwischenabschnitt 18c des Grundkörpers 12. Außerdem weist die Antriebswelle 10 mindestens eine Torsionsfeder 20 und/oder mindestens eine Torsionsstange in dem Zwischenabschnitt 18c des Grundkörpers 12 auf.

In Fig. 1 ist die mindestens eine Torsionsfeder 20 lediglich schematisch dargestellt. Auf diese Weise soll verdeutlicht werden, dass eine Vielzahl von verschiedenen Typen von Torsionsfedern 20 und/oder Torsionsstangen in dem Zwischenabschnitt 18c des Grundkörpers 12 einsetzbar ist.

Anstelle einer steifen Anbindung des Schneckenrads 14 an den Ritzel 16 weist die Antriebswelle 10 somit aufgrund der mindestens einen Torsionsfeder 18 und/oder der mindestens einen Torsionsstange ein elastisches Element auf. Trotzdem ist gewährleistet, dass der Ritzel 16 bei einer Drehbewegung des Schneckenrads 14 um eine entlang des Grundkörpers 12 verlaufende Drehachse 22 mitgedreht wird. Somit erfüllt die Antriebswelle 10 weiterhin verlässlich die Funktion einer Gewindekomponente, mittels welcher ein motorinduziertes Moment übersetzbar ist. Gleichzeitig kann die mindestens eine Torsionsfeder 20 und/oder die mindestens eine Torsionsstange für eine Torsionsdämpfung im Antriebsstrang zwischen dem Schneckenrad 14 und dem Ritzel 16 genutzt werden. Somit kann eine Schlagbeanspruchung, welche andernfalls zu einer Überlast der Zähne 14a des Schneckenrads 14 und/oder der Zähne 16a des Ritzels 16 führen könnte, zumindest kurzzeitig gedämpft werden.

Im Gegensatz zu einer herkömmlichen steifen Anbindung einer Welle nach dem Stand der Technik weist die Motorwelle 10 somit eine elastische Anbindung des Ritzels 16 an das Schneckenrad 14 auf. Eine Beschädigung der Verzahnung der Antriebswelle 10 muss damit während ihres Betriebs kaum befürchtet werden. Bei einem Einsatz der Antriebswelle 10 tritt somit kaum ein Zahnverschleiß auf. Die Antriebswelle 10 hat deshalb eine vorteilhaft lange Lebensdauer/Mindesteinsetzzeit.

Aufgrund der Ausstattung der Antriebswelle 10 mit der mindestens einen Torsionsfeder 20 und/oder der mindestens einen Torsionsstange ist der erste Abschnitt 18a in Bezug zu dem zweiten Abschnitt 18b unter einer Verbiegung der mindestens einen Torsionsfeder 20 und/oder der mindestens einen Torsionsstange um die entlang des Grundkörpers 12 verlaufende Drehachse 22 verdrehbar. Eine Torsionssteifigkeit der mindestens einen Torsionsfeder 20 und/oder der mindestens einen Torsionsstange kann mittels deren Form und/oder deren Material auf einfache Weise auf einen bevorzugten (in Hinblick auf einen Einsatz der Antriebswelle 10 optimierten) Wert festgelegt werden. Aufgrund der Verdrehbarkeit der mindestens einen Torsionsfeder 20 und/oder der mindestens einen Torsionsstange mit der bevorzugten Torsionssteifigkeit lässt sich selbst ein während eines Betriebs der Antriebswelle 10 häufig auftretender Schlag verlässlich absorbieren.

Beispielsweise können der Grundkörper 12, das Schneckenrad 14, das Ritzel 16, die mindestens eine Torsionsfeder 20 und/oder die mindestens eine Torsionsstange aus einem Kunststoff und/oder Gummi gebildet sein. Auch ein hochwertiger Kunststoff kann zum Herstellen des Grundkörpers 12, des Schneckenrads 14, des Ritzels 16, der mindestens einen Torsionsfeder 20 und/oder der mindestens einen Torsionsstange verwendet werden. Insbesondere können Kohlefasern und/oder Glasfasern in den Kunststoff eingebettet sein. Zum Herstellen der Komponenten 12 bis 20 der Antriebswelle 10 können somit kostengünstige Materialien eingesetzt werden. Eine Ausbildung mindestens einer Komponente 12 bis 20 der Antriebswelle 10 aus Kunststoff und/oder Gummi gewährleistet außerdem, dass eine Stoßbelastung verlässlich in die eine reversible Verformung der mindestens einen Torsionsfeder 20 und/oder der mindestens einen Torsionsstange bewirkende Torsionskraft umwandelbar ist.

Das Schneckenrad 14 und/oder das Ritzel 16 können auf den Grundkörper 12 aufgepresst sein. Ebenso können der Grundkörper 12, das Schneckenrad 14, das Ritzel 16, die mindestens eine Torsionsfeder 20 und/oder die mindestens eine Torsionsstange einstückig ausgebildet sein. Insbesondere kann die Antriebswelle 10 mit den Komponenten 12-20 als ein einstückiges Bauteil gespritzt sein. Auch bei einer Herstellung der Antriebswelle 10 durch ein Ausführen eines Spritzgussverfahrens können die Zähne 14a des Schneckenrads 14 und die Zähne 16a des Ritzels 16 unter verlässlicher Einhaltung einer vorgegebenen Form ausgebildet werden. Bei allen hier aufgezählten Herstellungsmöglichkeiten ist die Antriebswelle 10 als stabiles Bauteil mit einer Dämpfungsfunktion kostengünstig herstellbar.

Bei der Ausführungsform der Fig. 1 ist die Antriebswelle 10 in einem elektromechanischen Bremskraftverstärker eingesetzt. Der elektromechanische Bremskraftverstärker weist einen Motor 24 auf, durch dessen Betrieb eine Motorschnecke 26 um eine geneigt zu der Drehachse 22 ausgerichtete Motorschnecken-Längsachse 28 drehbar ist. Die Motorschnecken-Längsachse 28 kann insbesondere senkrecht zu der Drehachse 22 ausgerichtet sein. Eine Verzahnung der Motorschnecke 26 greift derart in die Zähne 14a des Schneckenrads 14 ein, dass das Schneckenrad 14 mittels der gedrehten Motorschnecke 26 um die Drehachse 22 gedreht wird. Aufgrund der Anbindung des Ritzels 16 an das Schneckenrad 14 über den Grundkörper 12 wird das Ritzel 16 gleichzeitig in eine gewünschte Drehbewegung um die Drehachse 22 mitversetzt.

Die Zähne 16a des Ritzels 16 können in mindestens eine Stellerverzahnung 30 eines Stellkörpers 32 derart eingreifen, dass mittels des in die Drehbewegung um die Drehachse 22 versetzten Ritzels 16 eine Kraft auf den Stellkörper 32 übertragbar ist. Insbesondere kann der Stellkörper 32 auf diese Weise in eine lineare Verstellbewegung entlang einer vorgegebenen Achse 34 versetzbar sein. Die Antriebswelle 10 kann somit erfolgreich dazu genutzt werden, ein Drehmoment des Motors 24 in eine Verstellbewegung des Stellkörpers 32 entlang der Achse 34 zu versetzen. Insbesondere kann der Stellkörper 32 in zwei entgegen gerichteten Richtungen entlang der Achse 34 wahlweise verstellbar sein. Die Achse 34 ist bevorzugt senkrecht zu der Drehachse 22 ausgerichtet. Es wird jedoch darauf hingewiesen, dass die Einsetzbarkeit der Antriebswelle 10 nicht auf eine bestimmte Ausrichtung der Achsen 22, 28 und/oder 34 limitiert ist.

In der Ausführungsform der Fig. 1 ist der Stellkörper 32 ein Verstärkerkolben 32 (Boost Body) des elektromechanischen Bremskraftverstärkers, durch dessen (nicht dargestellte) innere Öffnung eine Eingangsstange führbar ist. Es wird jedoch darauf hingewiesen, dass die Einsetzbarkeit der Antriebswelle 10 weder auf einen bestimmten Motortyp des Motors 24 noch auf eine bestimmte Ausbildung des Stellkörpers 32 limitiert ist.

Der in Fig. 1 teilweise wiedergegebene elektromechanische Bremskraftverstärker weist aufgrund seiner Ausstattung mit der vorteilhaften Antriebswelle 10 eine vergleichsweise lange Lebensdauer/Mindesteinsetzzeit auf. Insbesondere entfällt selbst bei einem längeren Betrieb des elektromechanischen Bremskraftverstärkers eine Notwendigkeit eines Austausches der Antriebswelle 10 aufgrund von einem Zahnverschleiß.

Es wird darauf hingewiesen, dass die Einsetzbarkeit der Antriebswelle 10 nicht auf einen elektromechanischen Bremskraftverstärker limitiert ist. Beispielsweise kann die Antriebswelle 10 auch in einer Kupplung eingesetzt werden. Ein mit der Antriebswelle 10 ausgestatteter Plunger realisiert ebenfalls die oben schon erläuterten Vorteile.

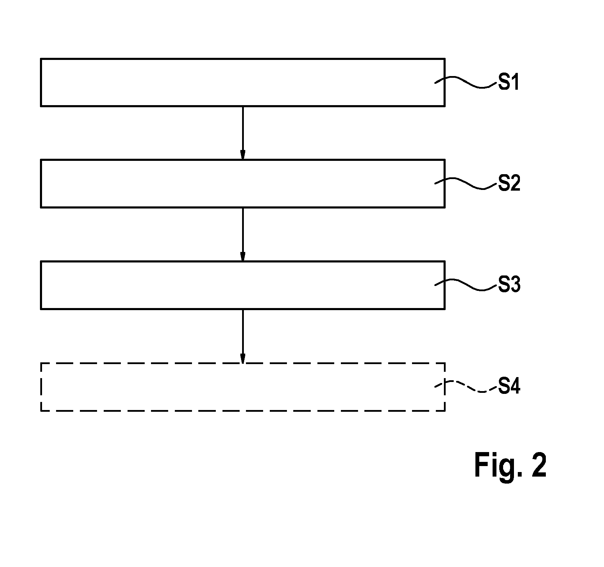

Fig. 2 zeigt ein Flussdiagramm zum Erläutern einer Ausführungsform des Herstellungsverfahrens für eine Antriebswelle.

Das im Weiteren beschriebene Herstellungsverfahren kann beispielsweise zum Herstellen der oben beschriebenen Antriebswelle ausgeführt werden. Mittels des Herstellungsverfahrens sind jedoch auch abweichende Typen einer Antriebswelle herstellbar.

In einem Verfahrensschritt S1 wird ein Schneckenrad an einem ersten Abschnitt eines Grundkörpers der Antriebswelle ausgebildet oder angeordnet. Beispielsweise kann das Schneckenrad an dem Grundkörper angepresst werden.

In einem Verfahrensschritt S2 erfolgt ein Ausbilden oder Anordnen eines Ritzels an einem zweiten Abschnitt des Grundkörpers. Die Lage des Ritzels wird dabei so festgelegt, dass der zweite Abschnitt des Grundkörpers um einen Zwischenabschnitt des Grundkörpers beabstandet von dem ersten Abschnitt des Grundkörpers liegt. Auch das Ritzel kann auf den Grundkörper aufgepresst werden.

Ein Ausbilden oder Anordnen mindestens einer Torsionsfeder und/oder mindestens einer Torsionsstange in dem Zwischenabschnitt des Grundkörpers erfolgt in einem Verfahrensschritt S3. Durch auf diese Weise realisierte Ausbildung des Zwischenabschnitts können die oben schon genannten Vorteile der fertig hergestellten Antriebswelle realisiert werden.

Es wird darauf hingewiesen, dass die Verfahrensschritte S1 bis S3 gleichzeitig und/oder in einer beliebigen Reihenfolge ausführbar sind. In einer besonders vorteilhaften Ausführungsform des Herstellungsverfahrens können die Verfahrensschritte S1 bis S3 gleichzeitig ausgeführt werden, indem die Antriebswelle mittels eines Spritzgussverfahrens als ein einstückiges Bauteil gespritzt wird. Dabei kann insbesondere ein Kunststoff und/oder Gummi verwendet werden. Wahlweise können in den Kunststoff Kohlefasern und/oder Glasfasern eingebettet sein.

In einer vorteilhaften Weiterbildung können die Verfahrensschritte S1 bis S3 auch zum Herstellen eines elektromechanischen Bremskraftverstärkers ausgeführt werden. In einem optionalen weiteren Verfahrensschritt S4 kann in diesem Fall ein verstellbarer Stellkörper des Bremskraftverstärkers über die Antriebswelle an einen Motor des Bremskraftverstärkers angebunden werden. Das Anbinden des verstellbaren Stellkörpers an den Motor des Bremskraftverstärkers kann derart erfolgen, dass die Motorschnecke mit dem Schneckenrad der Antriebswelle und eine Stellerverzahnung des Stellkörpers mit dem Ritzel der Antriebswelle verzahnt werden. Somit kann der Stellkörper mittels einer Drehbewegung der Motorschnecke des Motors in eine lineare Verstellbewegung verstellt werden. Ein auf diese Weise hergestellter elektromechanischer Bremskraftverstärker lässt sich vorteilhaft in einem Bremssystem einsetzen. Insbesondere weist ein derartiger elektromechanischer Bremskraftverstärker eine hohe Lebensdauer/Mindesteinsetzzeit auf.

Es wird jedoch ausdrücklich darauf hingewiesen, dass die Verwendbarkeit einer mittels der Verfahrensschritte S1 bis S3 hergestellten Antriebswelle nicht auf einen elektromechanischen Bremskraftverstärker limitiert ist. Beispielsweise kann die Antriebswelle auch in einer Kupplung oder in einem Plunger eingesetzt werden.

## Patentansprüche

1. Antriebswelle (10) mit
einem Grundkörper (12);
einem Schneckenrad (14) an einem ersten Abschnitt (18a) des Grundkörpers (12); und
einem Ritzel (16) an einem zweiten Abschnitt (18b) des Grundkörpers (12), wobei zwischen dem ersten Abschnitt (18a) und dem zweiten Abschnitt (18b) ein Zwischenabschnitt (18c) des Grundkörpers (12) liegt;
**gekennzeichnet durch**
mindestens eine Torsionsfeder (20) und/oder mindestens eine Torsionsstange in dem Zwischenabschnitt (18c) des Grundkörpers (12).

2. Antriebswelle (10) nach Anspruch 1, wobei der Grundkörper (12), das Schneckenrad (14), das Ritzel (16), die mindestens eine Torsionsfeder (20) und/oder die mindestens eine Torsionsstange aus einem Kunststoff und/oder Gummi gebildet sind.

3. Antriebswelle (10) nach Anspruch 2, wobei Kohlefasern und/oder Glasfasern in den Kunststoff eingebettet sind.

4. Antriebswelle (10) nach einem der vorhergehenden Ansprüche, wobei das Schneckenrad (14) und/oder das Ritzel (16) auf den Grundkörper (12) aufgepresst sind.

5. Antriebswelle (10) nach einem der Ansprüche 1 bis 3, wobei der Grundkörper (12), das Schneckenrad (14), das Ritzel (16), die mindestens eine Torsionsfeder (20) und/oder die mindestens eine Torsionsstange einstückig ausgebildet sind.

6. Antriebswelle (10) nach einem der vorhergehenden Ansprüche, wobei der erste Abschnitt (18a) in Bezug zu dem zweiten Abschnitt (18b) unter einer Verbiegung der mindestens einen Torsionsfeder (20) und/oder der mindestens einen Torsionsstange um eine entlang des Grundkörpers (12) verlaufende Drehachse (22) verdrehbar ist.

7. Elektromechanischer Bremskraftverstärker mit einer Antriebswelle (10) nach einem der vorhergehenden Ansprüche.

8. Kupplung mit einer Antriebswelle (10) nach einem der Ansprüche 1 bis 6.

9. Herstellungsverfahren für eine Antriebswelle (10) mit den Schritten:
Ausbilden oder Anordnen eines Schneckenrads (14) an einem ersten Abschnitt (18a) eines Grundkörpers (12) der Antriebswelle (10) (S1); und
Ausbilden oder Anordnen eines Ritzels (16) an einem zweiten Abschnitt (18b) des Grundkörpers (12), welcher um einen Zwischenabschnitt (18c) des Grundkörpers (12) beabstandet von dem ersten Abschnitt (18a) des Grundkörpers (12) liegt (S2);
**gekennzeichnet durch** den Schritt:
Ausbilden oder Anordnen mindestens einer Torsionsfeder (20) und/oder mindestens einer Torsionsstange in dem Zwischenabschnitt (18c) des Grundkörpers (12) (S3).

10. Herstellungsverfahren für einen elektromechanischen Bremskraftverstärker mit den Schritten:
Anbinden eines verstellbaren Stellkörpers (32) des Bremskraftverstärkers derart an einem Motor (24) des Bremskraftverstärkers, dass der Stellkörper (32) mittels einer Drehbewegung einer Motorschnecke (26) des Motors (24) in eine lineare Verstellbewegung verstellt wird;
**gekennzeichnet durch** den Schritt:
Anbinden des Stellkörpers (32) an den Motor (24) über eine Antriebswelle (10) nach einem der Ansprüche 1 bis 6 oder hergestellt gemäß Anspruch 9 so, dass die Motorschnecke (26) mit dem Schneckenrad (14) der Antriebswelle (10) und eine Stellerverzahnung (30) des Stellkörpers (32) mit dem Ritzel (16) der Antriebswelle (10) verzahnt werden.
